(19) Europäisches Patentamt
European Patent Office
Office européen des brevets

(11) **EP 3 916 942 A1**

(12) **EUROPEAN PATENT APPLICATION**
published in accordance with Art. 153(4) EPC

(43) Date of publication:
**01.12.2021 Bulletin 2021/48**

(21) Application number: **20744531.3**

(22) Date of filing: **23.01.2020**

(51) Int Cl.:
**H02J 3/00** $^{(2006.01)}$ **H02J 3/28** $^{(2006.01)}$
**H02J 3/32** $^{(2006.01)}$ **H02J 3/38** $^{(2006.01)}$
**H02J 3/46** $^{(2006.01)}$

(86) International application number:
**PCT/JP2020/002388**

(87) International publication number:
**WO 2020/153443 (30.07.2020 Gazette 2020/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.01.2019 JP 2019009725**

(71) Applicant: **Panasonic Intellectual Property
Management Co., Ltd.
Osaka-shi, Osaka 540-6207 (JP)**

(72) Inventors:
• **ISE, Takehiko**
  **Osaka-shi, Osaka 540-6207 (JP)**
• **ITO, Tomoki**
  **Osaka-shi, Osaka 540-6207 (JP)**
• **SHIMIZU, Atsushi**
  **Osaka-shi, Osaka 540-6207 (JP)**

(74) Representative: **Vigand, Philippe et al
Novagraaf International SA
Chemin de l'Echo 3
1213 Onex - Genève (CH)**

(54) **ENERGY MANAGEMENT SYSTEM AND METHOD FOR CONTROLLING SAME**

(57) The energy management system performs forecast of power consumption of the load of each of the first consumer and the second consumer; calculates a self-sufficiency rate of entirety of both the first consumer and the second consumer, based on self-sufficient electric power supplied to the load in accordance with the forecast of power consumption and on purchase electric power supplied from the electric power system to the load; and provides interchange control of energy so that at least a part of electric power generated by the renewable energy power generator of the second consumer is accumulated in the energy accumulator of the first consumer so that the self-sufficiency rate exceeds a threshold value.

*Fig.3*

START
S1 DEMAND FORECAST COMPUTATION
S2 CREATE SUPPLY PLAN
S3 CREATE INTERCHANGE PLAN
S4 CALCULATE SELF-SUFFICIENCY RATE
S5 FELF-SUFFICIENCY RATE IS THRESHOLD VALUE OR MORE? — YES
NO
S6 FURTHER POWER INTERCHANGE IS POSSIBLE AMONG CONSUMERS? YES
NO
S7 DETERMINE PLAN
END

**EP 3 916 942 A1**

**Description**

TECHNICAL FIELD

The present disclosure relates to an energy management system and control method thereof that interchanges energy among a plurality of consumers having a load, an electric power system supplying electric power to the load, a renewable energy power generator supplying electric power to the load, and an energy accumulator accumulating energy of electric power generated by the renewable energy power generator so as to allow supply to the load.

BACKGROUND ART

Of late years, in electric power consumers, introduction of distributed power sources is progressing such as power generation devices using renewable energy including sunlight and storage batteries, while an energy management system for liaison control thereof has been developed. Moreover, in future, techniques are being required that not only allow a single energy management system to control distributed power sources under its own control but also allow liaison and cooperation among energy management systems. For example, such a technique is required that interchanges electric power for supply of surplus amount of electric power and procurement of insufficient amount of electric power among a plurality of consumers, depending on varying electric power supply and electric power consumption.

For example, in Patent Document 1, a method has been proposed that determines a need for interchange and an amount of interchange electric power based on whether the surplus amount of electric power and electric power shortage are present and on the loss cost arising from surplus or shortage in the amount of electric power, to transmit the amount of interchange electric power to a counterpart power interchange control device via an transmission/reception unit.

PATENT DOCUMENT

Patent Document 1: WO 2017/191754 A1

SUMMARY OF THE INVENTION

The conventional energy management system can minimize the electricity charges paid by consumers since it creates an interchange plan based on the loss cost arising from the surplus or shortage in the amount of electric power. In order to be carbon free, however, there is a need to introduce barometers based on electric power not dependent on fossil fuel such as electric power derived from renewable energy. In the existing technique of the energy management system, however, no attention is paid to the viewpoint of being carbon-free, which may render it difficult to supply the consumers with carbon-free electric power.

The present disclosure intends to solve the above conventional problem and an object thereof is to provide an energy management system supplying consumers with carbon-free electric power and a control method thereof.

To achieve the above object, the energy management system of the present disclosure is configured as follows.

An energy management system according to one aspect of the present disclosure, interchanges energy between a first consumer and a second consumer. The first consumer has a load, an electric power system supplying electric power to the load, a renewable energy power generator supplying electric power to the load, and an energy accumulator accumulating energy of electric power generated by the renewable energy power generator so as to allow supply to the load. The second consumer has a load, an electric power system supplying electric power to the load, and a renewable energy power generator supplying electric power to the load. The energy management system includes a control device. The control device performs forecast of power consumption of the load of each of the first consumer and the second consumer. The control device calculates a self-sufficiency rate of entirety of both the first consumer and the second consumer, based on self-sufficient electric power supplied to the load in accordance with the forecast of power consumption and on purchase electric power supplied from the electric power system to the load. The control device provides interchange control of energy so that at least a part of electric power generated by the renewable energy power generator of the second consumer is accumulated in the energy accumulator of the first consumer so that the self-sufficiency rate exceeds a threshold value.

An energy management system according to another aspect of the present disclosure, interchanges energy between a first consumer and a second consumer. The first consumer has a load, an electric power system supplying electric power to the load, a renewable energy power generator supplying electric power to the load, and an energy accumulator accumulating energy of electric power generated by the renewable energy power generator so as to allow supply to the load. The second consumer has a load, an electric power system supplying electric power to the load, and a renewable energy power generator supplying electric power to the load. The energy management system includes a control device. The control device performs forecast of power consumption of the load of each of the first consumer and the second consumer. The control device calculates a self-sufficiency rate of entirety of both the first consumer and the second consumer, based on self-sufficient electric power supplied to the load in accordance with the forecast of power consumption and on purchase electric power supplied from the electric power system to the load. The control device provides interchange control of energy so that at least a part of electric power accumulated in the energy accumulator of the first consumer is supplied to the load of the second consumer so that the self-sufficiency rate exceeds a threshold value.

A method of controlling an energy management system according to one aspect of the present disclosure, interchanging energy between a first consumer and a second consumer. The first consumer has a load, an electric power system supplying electric power to the load, a renewable energy power generator supplying electric power to the load, and an energy accumulator accumulating energy of electric power generated by the renewable energy power generator so as to allow supply to the load. The second consumer has a load, an electric power system supplying electric power to the load, and a renewable energy power generator supplying electric power to the load. The method includes: performing forecast of power consumption of the load of each of the first consumer and the second consumer; calculating a self-sufficiency rate of entirety of both the first consumer and the second consumer, based on self-sufficient electric power supplied to the load in accordance with the forecast of power consumption and on purchase electric power supplied from the electric power system to the load; and providing interchange control of energy so that at least a part of electric power generated by the renewable energy power generator of the second consumer is accumulated in the energy accumulator of the first consumer so that the self-sufficiency rate exceeds a threshold value.

A method of controlling an energy management system according to another aspect of the present disclosure, interchanging energy between a first consumer and a second consumer. The first consumer has a load, an electric power system supplying electric power to the load, a renewable energy power generator supplying electric power to the load, and an energy accumulator accumulating energy of electric power generated by the renewable energy power generator so as to allow supply to the load. The second consumer has a load, an electric power system supplying electric power to the load, and a renewable energy power generator supplying electric power to the load. The method includes: performing forecast of power consumption of the load of each of the first consumer and the second consumer; calculating a self-sufficiency rate of entirety of both the first consumer and the second consumer, based on self-sufficient electric power supplied to the load in accordance with the forecast of power consumption and on purchase electric power supplied from the electric power system to the load; and providing interchange control of energy so that at least a part of electric power accumulated in the energy accumulator of the first consumer is supplied to the load of the second consumer so that the self-sufficiency rate exceeds a threshold value.

According to the energy management system and its control method of the present disclosure, carbon-free electric power can be supplied to the consumers by performing interchange control of energy based on the self-sufficiency rate.

BRIEF DESCRIPTION OF DRAWINGS

Fig. 1 is a schematic diagram showing a configuration of an energy management system and consumers in an embodiment of the present disclosure.
Fig. 2 is a block diagram showing a configuration of the energy management system of the embodiment.
Fig. 3 is a flowchart explaining actions of the energy management system 101 of the embodiment.
Fig. 4 is a table showing supply plans, interchange plans, and purchase plans of electric power that are created by an energy management system according to Example 1 of the embodiment.
Fig. 5 is a diagram showing power consumption demand forecasts and the supply plans, the interchange plans, and the purchase plans of electric power that are created by the energy management system of the embodiment.
Fig. 6 is a table showing supply plans, interchange plans, and purchase plans of electric power that are created by an energy management system according to Example 2 of the embodiment.
Fig. 7 is a table showing supply plans, interchange plans, and purchase plans of electric power that are created by an energy management system according to Example 3 of the embodiment.

EMBODIMENT(S) FOR CARRYING OUT THE INVENTION

1. An energy management system according to the first aspect of the present disclosure, interchanges energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load. The energy management system includes: a control device configured to perform forecast of power consumption of the load of each of the first consumer and the second consumer; calculate a self-sufficiency rate of entirety of both the first consumer and the second consumer, based on self-sufficient electric power supplied to the load in accordance with the forecast of power consumption and on purchase electric power supplied from the electric power system to the load; and provide interchange control of energy so that at least a part of electric power generated by the renewable energy power generator of the second consumer is accumulated in the energy accumulator of the first consumer so that the self-sufficiency rate exceeds a threshold value.

An energy management system according to the second aspect of the present disclosure, interchanges energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load. The energy management system includes: a control device configured to perform forecast of power consumption of the load of each of the first consumer and the second consumer; calculate a self-sufficiency rate of entirety of both the first consumer and the second consumer, based on self-sufficient electric power supplied to the load in accordance with the forecast of power consumption and on purchase electric power supplied from the electric power system to the load; and provide interchange control of energy so that at least a part of electric power accumulated in the energy accumulator of the first consumer is supplied to the load of the second consumer so that the self-sufficiency rate exceeds a threshold value.

The energy management system according to the third aspect of the present disclosure, in the first or second aspect, wherein the control device includes: a demand forecast computing unit configured to perform forecast of power consumption of the load of the first consumer and the second consumer; a supply plan creation unit configured to create a supply plan of electric power supplied from the renewable energy power generator of each of the first consumer and the second consumer and from the energy accumulator to each of the loads, based on the forecast of power consumption; an interchange plan creation unit configured to create an interchange plan of electric power transferred from the consumer having surplus electric power to the consumer with electric power shortage between the first consumer and the second consumer, based on the forecast of power consumption and on the electric power supply plan; a self-sufficiency rate calculation unit configured to calculate a self-sufficiency rate of entirety of both the first consumer and the second consumer, based on the forecast of power consumption, self-sufficient electric power supplied to the load based on the supply plan of electric power and the interchange plan of electric power, and purchase electric power suppled from the electric power system to the load; and a plan determination unit configured to fix the operation plan of electric power and the interchange plan of electric power when the self-sufficiency rate is equal to or greater than a threshold value.

The energy management system according to the fourth aspect of the present disclosure, in the third aspect, further includes: a plan coordination unit configured to cause at least one of the supply plan creation unit and the interchange plan creation unit to execute plan modification when the self-sufficiency rate is smaller than the threshold value.

The energy management system according to the fifth aspect of the present disclosure, in the third or fourth aspect, wherein the interchange plan creation unit creates an interchange plan of electric power so that electric power generated by the renewable energy power generator of the second consumer is accumulated in the energy accumulator of the first consumer.

A method of controlling an energy management system according to the sixth aspect of the present disclosure, interchanging energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load. The method includes: performing forecast of power consumption of the load of each of the first consumer and the second consumer; calculating a self-sufficiency rate of entirety of both the first consumer and the second consumer, based on self-sufficient electric power supplied to the load in accordance with the forecast of power consumption and on purchase electric power supplied from the electric power system to the load; and providing interchange control of energy so that at least a part of electric power generated by the renewable energy power generator of the second consumer is accumulated in the energy accumulator of the first consumer so that the self-sufficiency rate exceeds a threshold value.

A method of controlling an energy management system according to the seventh aspect of the present disclosure, interchanging energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load. The method includes: performing forecast of power consumption of the load of each of the first consumer and the second consumer; calculating a self-sufficiency rate of entirety of both the first consumer and the second consumer, based on self-sufficient electric power supplied to the load in accordance with the forecast of power consumption and on purchase electric power supplied from the electric power system to the load; and providing interchange control of energy so that at least a part of electric power accumulated in the energy accumulator of the first consumer is supplied to the load of the second consumer so that the self-sufficiency rate exceeds a threshold value.

The method of controlling an energy management system according to the eighth aspect of the present disclosure, in the sixth or seventh aspect, wherein the calculating a self-sufficiency rate includes: creating a supply plan of electric power supplied to the load from the renewable energy power generator of each of the first consumer and the second consumer and from the energy accumulator, based on the forecast of power consumption; creating an interchange plan of electric power transferred from the consumer with surplus electric power to the consumer with electric power shortage between the first consumer and the second consumer, based on the forecast of power consumption and on the supply plan of electric power; and calculating an self-sufficiency rate of entirety of both the first consumer and the second consumer, based on the forecast of power consumption, self-sufficient electric power supplied to the load based on the supply plan of electric power and the interchange plan of electric power, and purchase electric power supplied from the electric power system to the load.

The method of controlling an energy management system according to the ninth aspect of the present disclosure, in the eighth aspect, wherein when the self-sufficiency rate is smaller than the threshold value, plan modification is executed for at least one of the supply plan of electric power and the interchange plan of electric power.

The method of controlling an energy management system according to the tenth aspect of the present disclosure, in the eighth or ninth aspect, wherein the interchange plan of electric power is made so that electric power generated by the renewable energy power generator of the second consumer is accumulated in the energy accumulator of the first consumer.

A program according to the 11th aspect of the present disclosure, causing a computer to execute a method of controlling an energy management system in any one of the sixth to tenth aspect.

An embodiment of the present disclosure will hereinafter be described with reference to the drawings.

Embodiment

(Configuration)

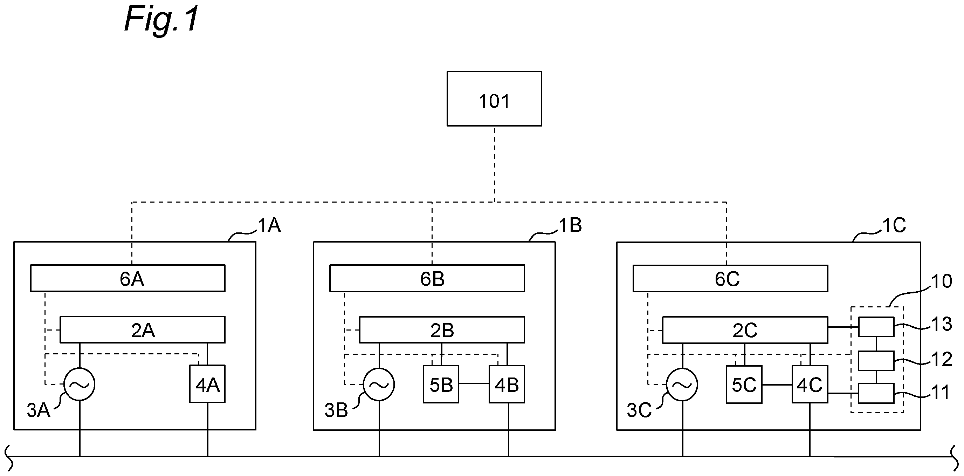

Fig. 1 is a diagram showing an energy management system 101 in the embodiment of the present disclosure and a plurality of consumers to be managed by the energy management system 101. In the following description, when referring to any consumer in the plurality of consumers, the consumer is referred to as "consumer 1", while when referring to a specific consumer, the consumer is referred to as consumer 1A, 1B, or 1C for example. Although Fig. 1 exemplifies a case where the plurality of consumers 1 are e.g. three consumers 1A, 1B, and 1C, the number of the consumers 1 may be plural (n or more (n is a natural number not less than 2)). In the subsequent description, constituent elements included in any consumer 1 will be described with reference numerals 2, 3, 4, 5, 6, etc., whereas when referring to constituent elements included in the specific consumer 1A, 1B, or 1C, they will be described with reference numerals 2A, 2B, 2C, etc., according to the reference numeral of the consumer.

The plurality of consumers 1 to be managed by the energy management system 101 include, as their basic configuration, a load, an electric power system, a renewable energy power generator, and an energy accumulator. The consumer 1 is for example a facility such as a house, an apartment, a factory, and a building, but without being limited thereto, it may be configured from some equipment in a facility or equipment that spans a plurality of facilities.

A load 2 is equipment that consumes electric power in the consumer 1. The load 2 is equipment such as lighting, an air conditioner, and a hot water supply for example and consumes an electric power within the consumer 1 depending on the use of the equipment.

An electric power system 3 is a system supplying electric power from the exterior of the consumer 1 and is connected so that electric power for the load 2 can be supplied. The electric power system 3 is connected for example to an electric power distribution line from an electric power company and receives electric power (that is, purchase of electric power (buying of electricity) supplied from the electric power distribution line so that electric power can be supplied within the consumer 1. The electric power system 3 is connected to electric power systems 3 in other consumers 1 so that surplus electric power in other consumers 1 can be interchanged and received. The electric power system 3 may be connected to equipment other than the load 2, for example to the energy accumulator so that electric power can be supplied within the consumer 1. Surplus electric power generated in the consumer 1 may be sold via the electric power system 3 to an electric power company.

A renewable energy power generator 4 is power generation equipment utilizing renewable energy such as solar power generation and wind power generation for example. The renewable energy power generator 4 includes a carbon-free power generator that utilizes energy of electric power generated by the renewable energy power generator. Such a power generator can be for example a power generator such as a fuel cell that uses electric power generated by the renewable energy power generator 4 to produce hydrogen to utilize hydrogen produced.

An energy accumulator 5 is a device storing energy such as electric power so that it can be supplied. The energy accumulator 5 can be for example a storage battery that stores electric power and that supplies the stored electric power by discharging. Examples of the energy accumulator 5 include also a device that accumulates gas produced by a power-to-gas (P2G) system utilizing renewable energy so that it can be supplied. Examples of the energy accumulator 5 include a hydrogen accumulator that uses electric power generated by the renewable energy power generator 4 to produce hydrogen to accumulate produced hydrogen so that it can be supplied to power generation equipment such as a fuel cell. The energy accumulator 5 is not limited to fixedly installed equipment in the consumer 1, but may be a storage battery or the like mounted on electric vehicles.

The consumer 1 includes a control device 6 that controls actions of the load 2, the electric power system 3, the renewable energy power generator 4, and the energy accumulator 5. The control device 2 includes a computing unit (not shown) such as CPU and a storage unit (not shown) such as ROM and RAM. The storage unit stores therein an action program controlling each of the devices and information such as various fixed data on action control. The computing unit reads software such as the action program from the storage unit and executes it so that the control device 6 can control various actions of the respective devices. The control device 6 may be configured from a single controller for centralized control or may be composed of a plurality of controllers cooperative with each other for distributed control.

The control device 6 in each consumer 1 is connected to the energy management system 101 and performs action control of each device, based on an action command from the energy management system 101. The energy management system 101 includes a computing unit (not shown) such as CPU and a storage unit (not shown) such as ROM and RAM. The storage unit stores therein a basic program performing calculation of the energy management system 101 and information such as various fixed data. The computing unit reads and executes software such as this basic program so that control on energy management can be done on the control device 6 to which it belongs. The energy management system 101 may be configured from a single controller for centralized control or may be composed of a plurality of controllers cooperative with each other for distributed control. Using the control devices 6 of the consumers 1 as slaves, the energy management system 101 may be configured as a central control device that integratedly controls those control devices 6. One or more control devices 6 of the consumers 1 may be used as a master, that is, the energy management system 101, with the remaining control devices 2 as slaves, or otherwise, various configurations may be employed without being limited to those configurations.

In this embodiment shown in Fig. 1, the case will be described as an example where control is done on the control devices 6 in the consumers 1 with the energy management system 101 as the central control device. A power supply path in each device consists of distribution lines for example and a control information path between the control device 6 and each device is configured from a wired or wireless communication network.

Description will now be given of a specific configuration of the consumers 1A, 1B, and 1C that are a plurality of consumers 1 shown in Fig. 1.

The consumer 1A includes a load 2A, an electric power system 3A, a renewable energy power generator 4A, and a control device 6A, with no energy accumulator.

The consumer 1B includes a load 2B, an electric power system 3B, a renewable energy power generator 4B, an energy accumulator 5B, and a control device 6B.

The consumer 1C includes a load 2C, an electric power system 3C, a renewable energy power generator 4C, an energy accumulator 5C, and a control device 6C. The consumer 1 includes a hydrogen power generation system 10 for example as a carbon-free power generation system that utilizes energy of electric power generated by the renewable energy power generator 4C. The hydrogen power generation system 10 includes a hydrogen production device 11, a hydrogen storage device 12, and a fuel cell device 13. The hydrogen production device 11 is a device that produces hydrogen by utilizing electric power generated by the renewable energy power generator 4C or electric power supplied from the energy accumulator 5C accumulating the electric power. The hydrogen storage device 12 is a device that accumulates hydrogen produced by the hydrogen production device 11 so that it can be supplied as energy. The fuel cell device 13 is a device that generates electric power by utilizing hydrogen stored in the hydrogen storage device 12. The fuel cell device 13 is connected to the load 2C so that generated electric power can be supplied to the load 2C.

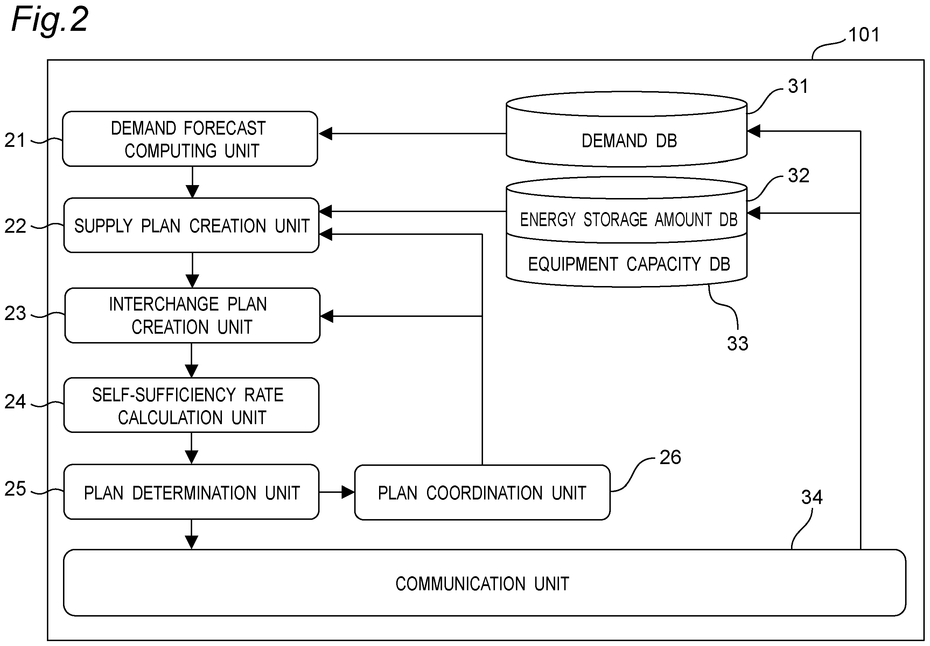

Next, shown in Fig. 2 is a function block diagram showing a main configuration of the energy management system 101 of the embodiment. Note that the configuration shown in Fig. 2 is an example of the configuration of the energy management system 101 and that various other configurations may be employed as long as substantially the same functions are implemented.

The energy management system 101 includes a demand forecast computing unit 21, a supply plan creation unit 22, an interchange plan creation unit 23, a self-sufficiency rate calculation unit 24, a plan determination unit 25, and a plan coordination unit 26. The energy management system 101 further includes a demand database (demand DB) 31, an energy storage amount database (energy storage amount) 32, an equipment capacity database (equipment capacity DB) 33, and a communication unit 34. Hereinafter, database is abbreviated as DB.

The demand DB 31 is a time-series record database of past power consumption demand values of the load 3 in the individual consumer 1. The power consumption demand values of the load 3 based on the use of equipment in the consumer 1 are accumulated as a time-series record. When there is no past accumulation record, default data of the power consumption demand values depending on equipment specifications of the consumer 1 may be stored in the demand DB 31.

The energy storage amount DB 32 is a time-series record database of the amount of energy such as electric power and hydrogen accumulated in the energy accumulator 5 and the hydrogen storage device 12 of the individual consumer 1. The energy storage amount DB 32 is updated based for example on the energy accumulation amount of the energy accumulator 5 measured by a sensor or on measurement values of the sensor that detects input/output of the energy accumulator 5. The sensor can be for example sensors measuring electric current, voltage, electric power, etc., but other sensors than those may be used.

The equipment capacity DB 33 contains information such as output upper/lower limits of all the devices related to the supply of energy such as the renewable energy power generator 4 and the energy accumulator 5 and information such as upper/lower limits of the accumulated energy. The demand DB 31, the energy storage amount DB 32, and the equipment capacity DB 33 may undergo continuous data read and record or may undergo data read and record at any timing. Each DB may be configured in various types of storage devices or may be configured on a cloud.

The demand forecast computing unit 21 has a function of performing a power consumption forecast (demand value forecast) of the load 2 in each consumer 1. For example, the demand forecast computing unit 21 performs a future power consumption forecast computation of the load 2, based on information of the demand DB 31, and outputs the computation result to the supply plan creation unit 22. The future power consumption forecast computation of the load 2 may be performed as a forecast computation of power consumption of the load 2 in the individual consumer 1 in a predetermined future period, for example, in a period of 24 hours from the present time.

The supply plan creation unit 22 has a function of creating a supply plan of electric power to be supplied from the renewable energy power generator 4 and the energy accumulator 5 to the load 2 in each consumer 1, based on the result of the power consumption forecast computation. Based on the demand forecast computation result received from the demand forecast computing unit 21 and on information of the energy storage amount DB 32 and the equipment capacity DB 33, the supply plan creation unit 22 creates an operation plan of the renewable energy power generator 4 and the energy accumulator 5, that is, a supply plan of electric power to be supplied from each device. This electric power supply plan includes an operation plan of the hydrogen production device 11, the hydrogen storage device 12, and the fuel cell device 13 in the hydrogen power generation system 10.

The supply plan creation unit 22 acquires a value (current value) of the current energy storage amount in the consumer 1 from the energy storage amount DB 32 and acquires a value (current value) of the current equipment capacity amount in the consumer 1 from the equipment capacity DB 33. Based on these acquired current values, the supply plan creation unit 22 finds a possible output value of the renewable energy power generator 4 and compares it with the demand forecast computation result to determine an output value of the renewable energy power generator 4 so that there is no surplus, to thereby create an electric power supply plan. In the same manner, the supply plan creation unit 22 determines an electric power suppliable from the energy accumulator 5 and an electric power suppliable from the fuel cell device 13, to create an electric power supply plan including these. If the output of the renewable energy power generator 4, the energy accumulator 5, and the fuel cell device 13 is short, it creates a plan to purchase electric power from the electric power system 3.

The interchange plan creation unit 23 has a function of creating a plan of electric power interchange from a consumer 1 with a power surplus to a consumer 1 with a power shortage among a plurality of consumers 1, based on the result of the power consumption forecast computation and on the electric power supply plan. Here, the surplus electric power in a consumer 1 refers to an electric power that can further be supplied from the renewable energy power generator 4, the energy accumulator 5, and the fuel cell device 13 after covering the power consumption of the load 2 in the consumer 1. The short electric power in a consumer 1 refers to an electric power that is still insufficient for the power consumption of the load 2 in the consumer 1 even if electric power suppliable from the renewable energy power generator 4, the energy accumulator 5, and the fuel cell device 13 is applied. The interchange plan creation unit 23 creates a plan of electric power interchange from a consumer 1 to another consumer 1, based on the created electric power supply plan and on the electric power purchase plan. A specific example of the interchange plan created by the interchange plan creation unit 23 will be described later.

The self-sufficiency rate calculation unit 24 has a function of calculating an overall self-sufficiency rate of a plurality of consumers 1, based on: a power consumption forecast; a self-sufficient electric power supplied to the load 2 based on the electric power supply plan and the electric power interchange plan; and a purchase electric power supplied from the electric power system 3 to the load 2. As used herein, the self-sufficiency rate refers to a ratio to the power consumption of the load 2 of the total amount of interchangeable electric power not including the amount consumed by the load 2 and the energy accumulator 5 and purchase electric power from the electric power system 3 in the amount of electric power generated by the renewable energy power generator 4 in the consumers 1. Specifically, the self-sufficiency rate is figured out from following Expression (1).

$$\text{(Self-sufficiency rate [\%])} = 1 + \{(\text{increase amount of accumulated energy}) - (\text{amount of purchase electric power})\} / (\text{electric power demand}) \ldots (1)$$

For example, the self-sufficiency rate of 100 % means that the total power consumption of the load 2 in the entire plurality of consumers 1 can be covered by carbon-free electric power.

The plan determination unit 25 has a function of comparing a self-sufficiency rate calculated by the self-sufficiency rate calculation unit 24 with a threshold value to perform judgment and, if the self-sufficiency rate is not less than the threshold value, fixing the electric power supply plan and the electric power interchange plan. The fixed electric power supply plan and electric power interchange plan and further the electric power purchase plan are transmitted via the communication unit 34 to the control device 6 in each consumer 1. Note that if the calculated self-sufficiency rate is judged to be less than the threshold value (that is, judged as NG), processing is carried out by the plan coordination unit 26 described later. The threshold value referred to by the plan determination unit 25 may be a predetermined value set in advance or may be a threshold value that is set differently depending on time zone, season, etc.

The plan coordination unit 26 has a function of causing at least one of the supply plan creation unit 22 and the interchange plan creation unit 23 to execute modification of the plan when the self-sufficiency rate is smaller than the threshold value. For example, if the deviation between the self-sufficiency rate and the threshold value is large, the plan coordination unit 26 may cause both the supply plan creation unit 22 and the interchange plan creation unit 23 to execute modification of their plans, whereas if the deviation is small, it may cause either the supply plan creation unit 22 or the interchange plan creation unit 23 to execute modification of the plan.

The communication unit 34 transmits a plan output from the plan determination unit 25 to the control device 6 and receives information on devices and equipment in each consumer 1. These transmission/reception may be direct communication from the communication unit 34 or may be performed via a control circuit such as a power conditioner (PCS) or a driver disposed in between.

In the energy management system 101, the various functions presented by the demand forecast computing unit 21, the supply plan creation unit 22, the interchange plan creation unit 23, the self-sufficiency rate calculation unit 24, the plan determination unit 25, and the plan coordination unit 26 are implemented by the computing unit such as CPU in a computer reading and executing software such as a basic program held in a storage unit. Such a storage unit may be provided as a record medium having a basic program stored therein. Such a record medium may be a non-transitory computer-readable record medium in which a basic program is stored. The storage medium is implemented by for example a flash memory, a solid state device (SSD), a hard disk, other storage devices, or their proper combinations.

(Action)

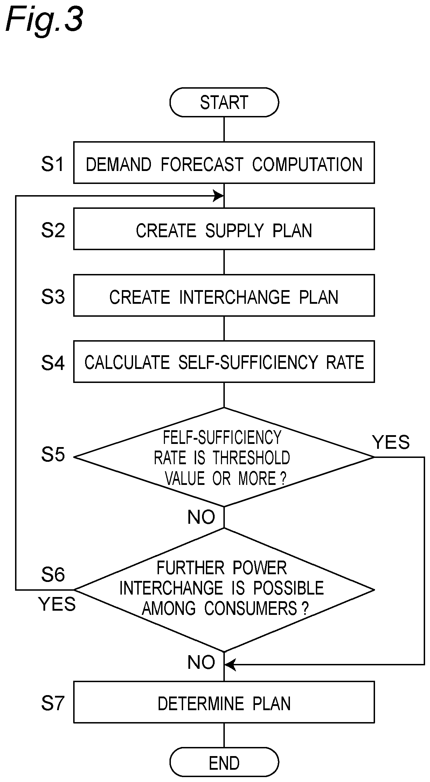

Referring next to a flowchart of Fig. 3, a control method of the energy management system 101 of the embodiment having such a configuration will be described as Example 1. Used for description of the control method is a specific example of a control method based on 24-hour demand forecast including daytime and nighttime in the three consumers 1A, 1B, and 1C shown in Fig. 1. In the following description, the renewable energy power generators 4A, 4B, and 4C in the consumers 1A, 1B, and 1C are solar power generation devices, while the energy accumulators 5B and 5C in the consumers 1B and 1C are storage batteries.

(Example 1)

(First Processing)

First, at step S1 of Fig. 3, power consumption demand is forecasted of the loads 2A, 2B, and 2C in the respective consumers 1A, 1B, and 1C. Specifically, the demand forecast computing unit 21 performs for example a forecast computation of next 24 hours power consumption of the load 2, based on information of the demand DB 31.

As a result of the forecast computation, the demand forecast computing unit 21 forecasts the power consumption of the consumer 1A to be 60 in daytime and 20 in nighttime; forecasts the power consumption of the consumer 1B to be 60 in daytime and 20 in nighttime; and forecasts the power consumption of the consumer 1C to be 60 in daytime and 20 in nighttime. In this description, examples of numerical values of electric power, etc. are expressed as indexes without units. These forecast computation results are output to the supply plan creation unit 22.

Then, based on the results of the power consumption forecast computations, a supply plan is created of electric power supplied to the loads 2A, 2B, and 2C from the renewable energy power generators 4A, 4B, and 4C and the energy accumulators 5B and 5C in the respective consumers 1A, 1B, and 1C (step S2). Specifically, the supply plan creation unit 22 creates an operation plan of the renewable energy power generator 4 and the energy accumulator 5, that is, a plan of supply of electric power from each device, based on the demand forecast computation result received from the demand forecast computing unit 21 and on information of the energy storage amount DB 32 and of the equipment capacity DB 33.

The supply plan creation unit 22 acquires information that energy accumulated in the energy storage devices 5B and 5C and the hydrogen storage device 12 is 0, based on information of the energy storage amount DB 32. The supply plan creation unit 22 acquires information that the power generation amount of each of the renewable energy power generators 4A, 4B, and 4C is 160 in daytime and 0 in nighttime, based on information of the equipment capacity DB 33. Based on these pieces of information, the supply plan creation unit 22 creates an electric power supply plan for the consumer 1A that with respect to the power consumption forecast of 60 in daytime the amount of power generation by the renewable energy power generator 4A is 160 and the amount of electricity selling (selling surplus electric power to an electric power company, etc.) via the power source system 3A is 100 and that with respect to the power consumption forecast of 20 in nighttime the amount of electricity buying (purchase electric power from an electric power company, etc.) via the power source system 3A is 20. Similarly, an electric power supply plan for the consumer 1B is created that with respect to the power consumption forecast of 60 in daytime the amount of power generation by the renewable energy power generator 4B is 160 and the amount of electricity selling via the power source system 3B is 100 and that with respect to the power consumption forecast of 20 in nighttime the amount of electricity buying via the power source system 3B is 20. An electric power supply plan for the consumer 1C is created that with respect to the power consumption forecast of 60 in daytime the amount of power generation by the renewable energy power generator 4C is 160 and the amount of electricity selling via the power source system 3C is 100 and that with respect to the power consumption forecast of 20 in nighttime the amount of electricity buying via the power source system 3C is 20. The created electric power supply plans are output to the interchange plan creation unit 23.

Next, the interchange plan creation unit 23 creates a plan of electric power interchange from a consumer 1 with a power surplus to a consumer 1 with a power shortage among the plurality of consumers 1, based on the power consumption forecast computation results and the electric power supply plans (step S3). Specifically, although the consumers 1A, 1B, and 1C are each supplied with purchase electric power in nighttime, all of the consumers 1A, 1B, and 1C have no power surplus during nighttime in the created electric power supply plans. For this reason, the interchange plan creation unit 23 regards the electric power interchange as being infeasible and creates interchange plans.

Next, the self-sufficiency rate calculation unit 24 calculates an overall self-sufficiency rate of the three consumers 1A, 1B, and 1C, based on: the power consumption forecast; the self-sufficient electric power supplied to the loads 2A, 2B, and 2C based on the electric power supply plans and the electric power interchange plans; and the purchase electric power supplied from the electric power systems 3A, 3B, and 3C to the loads 2A, 2B, and 2C (step S4).

This self-sufficiency rate is calculated as follows using Expression (1) described above.

Day and night demand electric power: 60+20+60+20+60+20=240
Increase amount of accumulated energy: 0
Amount of purchase electric power: 20+20+20=60
Self-sufficiency rate: 75 %
The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). For example, if the threshold value of the self-sufficiency rate is set in advance to 90 %, the plan determination unit 25 judges the calculated self-sufficiency rate of 75 % to be smaller than the threshold value, allowing the procedure to go to step S6.

Then, since the self-sufficiency rate has been judged to be smaller than the threshold value, the plan coordination unit 26 causes at least one of the supply plan creation unit 22 and the interchange plan creation unit 23 to execute modification of the plan. Prior to the execution of the plan modification, the plan coordination unit 26 judges whether interchangeable electric power can be produced by each of the consumers 1A, 1B, and 1C (step S6). For example, from the situations that each of the consumers 1A, 1B, and 1C sells surplus electric power in daytime and that electric power is not being accumulated in the energy accumulators 5B and 5C, etc., the plan coordination unit 26 judges production of interchangeable electric power as being possible. If production of interchangeable electric power is judged impossible, the plan determination unit 25 fixes the plan with the self-sufficiency rate lower than the threshold value (step S7).

(Second Processing; Plan Modification)

The plan coordination unit 25 then causes the supply plan creation unit 22 and the interchange plan creation unit 23 to execute modification of the electric power supply plan and of the electric power interchange plan (steps S2 and S3). For example, in the case of modifying the electric power supply plan, in the consumer 1B the energy accumulator 5B is caused to accumulate, at an efficiency of 0.9, a part: 11 of the daytime surplus electric power in electric power generated by the renewable energy power generator 4B. As a result, the amount of accumulated energy of the energy accumulator 5B turns to 10 and the amount of electricity selling decreases from 100 to 89. Electric power of 10 accumulated in the energy accumulator 5B in this manner is supplied to the load 2B at a discharge efficiency of 0.9 in nighttime. This enables the amount of nighttime electricity buying of the consumer 1B to be reduced from 20 to 11. A similar plan is created for the consumer 1C. In the thus modified electric power supply plan, the electric power interchange plan is not reviewed since electric power produced in the respective consumers 1A, 1B, and 1C is consumed in their respective loads 2A, 2B, and 2C. It is to be noted, when creating the electric power supply plan and interchange plan, that the plans may be created so as to allow priority use from a device with higher efficiencies while referring to a power generation efficiency, an energy accumulation efficiency, and a supply efficiency. In this embodiment, the accumulation efficiency (0.9) and the supply efficiency (0.9) of the energy accumulator 5 are higher than the accumulation efficiency (0.5) and the power generation efficiency (0.55) of the hydrogen power generation system 10.

The self-sufficiency rate is then calculated as follows using Expression (1) described above by the self-sufficiency rate calculation unit 24 (step S4).

Day and night demand electric power: 60+20+60+20+60+20=240
Increase amount of accumulated energy: 0
Amount of purchase electric power: 20+11+11=42
Self-sufficiency rate: 83 %
The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). Due to the self-sufficiency rate threshold value set to 90 % in advance, the plan determination unit 25 judges the recalculated self-sufficiency rate of 83 % to be less than the threshold value, allowing the procedure to go to step S6.

The plan coordination unit 26 judges whether interchangeable electric power can be produced by each of the consumers 1A, 1B, and 1C (step S6). For example, from the situations that each of the consumers 1A, 1B, and 1C still sells surplus electric power in daytime and that electric power is not being accumulated in the hydrogen storage device 12, the plan coordination unit 26 judges production of interchangeable electric power as being possible.

(Third Processing; Plan Remodification)

The plan coordination unit 25 then causes the supply plan creation unit 22 and the interchange plan creation unit 23 to execute remodification of the electric power supply plan and of the electric power interchange plan (steps S2 and S3). For example, in the case of modifying the electric power supply plan and interchange plan, the hydrogen production device 11 of the consumer 1C is supplied in daytime with: generated electric power of 70 from the renewable energy power generator 4A of the consumer 1A; generated electric power of 59 from the renewable energy power generator 4B of the consumer 1B; and generated electric power of 59 from the renewable energy power generator 4C of the consumer 1C. The hydrogen production device 11 uses the supplied electric power amount of 188 to produce hydrogen and, at an efficiency of 0.5, stores produced hydrogen into the hydrogen storage device 12 (storage amount: 94). In nighttime, using the hydrogen amount of 76 of hydrogen stored in the hydrogen storage device 12, the fuel cell device 13 generates electric power at an efficiency of 0.55 (power generation amount: 42). Electric power generated by the fuel cell device 13 is mutually interchanged among the consumers 1A, 1B, and 1C, to create a plan so that the amount of nighttime electricity buying becomes 0. Hydrogen of 94-76=18 remains in the hydrogen storage device 12. The electric power supply plan and interchange plan are modified in this manner.

The self-sufficiency rate is then calculated as follows using Expression (1) described above by the self-sufficiency rate calculation unit 24 (step S4).

Day and night demand electric power: 60+20+60+20+60+20=240

Increase amount of accumulated energy: 94-76=18
Amount of purchase electric power: 0
Self-sufficiency rate: 107 %
The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). Due to the self-sufficiency rate threshold value set to 90 % in advance, the plan determination unit 25 judges the recalculated self-sufficiency rate of 107 % to be equal to or more than the threshold value, to fix the modified electric power supply plan and electric power interchange plan at step S7. Based on the fixed electric power supply plan and electric power interchange plan, the energy management system 101 provides control for the control devices 6A, 6B, and 6C in the consumers 1A, 1B, and 1C.

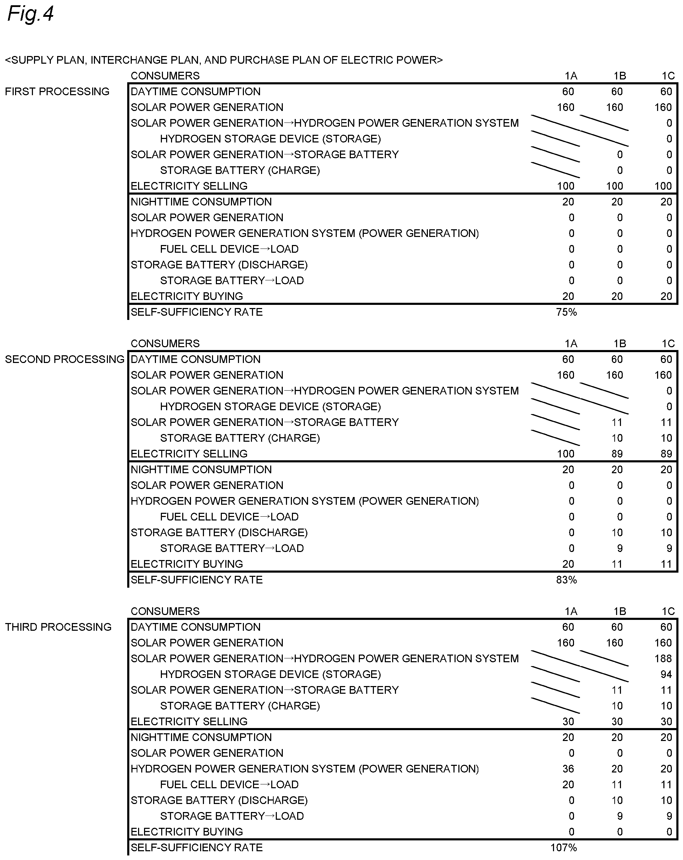

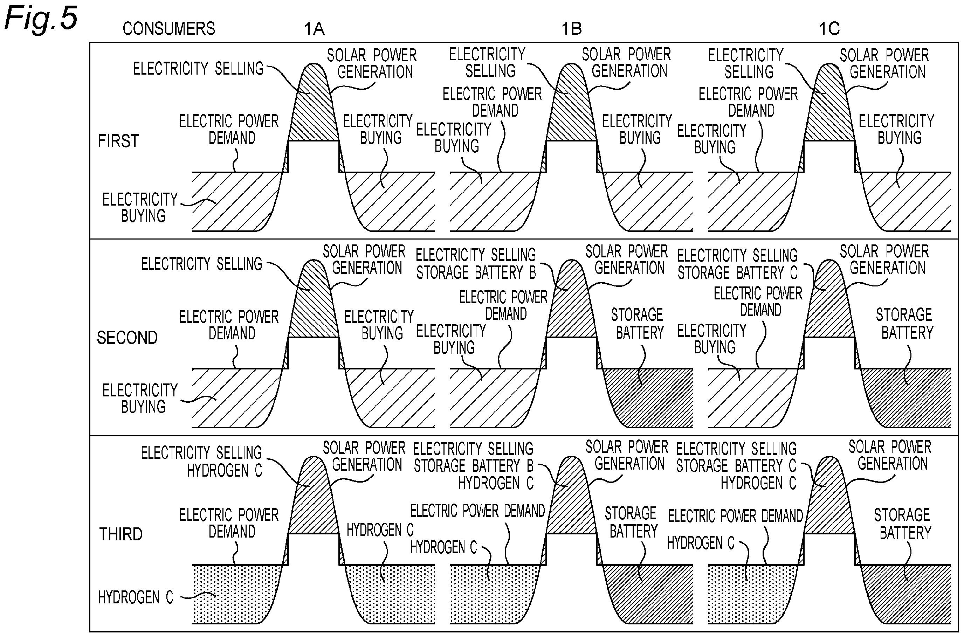

A table shown in Fig. 4 summarizes the electric power supply planning, the electric power interchange planning, and the electric power purchase planning that are performed through three-times of processing in this manner. A schematic diagram of Fig. 5 shows relationships between the power consumption demand forecasting and the electric power supply planning, the electric power interchange planning and the electric power purchase planning. The contents shown in Figs. 4 and 5 are as detailed above.

(Example 2)

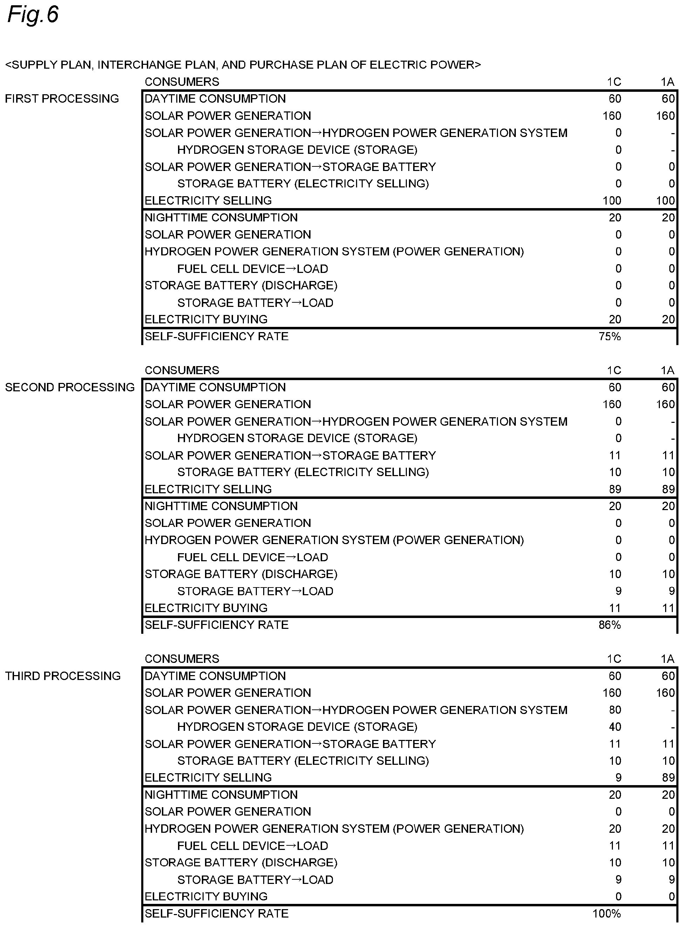

A case will then be described as Example 2 where the energy management system 101 provides energy interchange control between the consumers 1B and 1C described above. A table shown in Fig. 6 summarizes electric power supply planning, electric power interchange planning, and electric power purchase planning that are performed through three-times of processing as will be described later in Example 2.

(First Processing)

First, at step S1 of Fig. 3, power consumption demand is forecasted of the loads 2B and 2C in the respective consumers 1B and 1C.

As a result of the forecast computation, the demand forecast computing unit 21 forecasts the power consumption of the consumer 1B to be 60 in daytime and 20 in nighttime and forecasts the power consumption of the consumer 1C to be 60 in daytime and 20 in nighttime. These forecast computation results are output to the supply plan creation unit 22.

Then, based on the results of the power consumption forecast computations, a supply plan is created of electric power supplied to the loads 2B and 2C from the renewable energy power generators 4B and 4C and the energy accumulators 5B and 5C in the respective consumers 1B and 1C (step S2).

The supply plan creation unit 22 acquires information that energy accumulated in the energy storage devices 5B and 5C and the hydrogen storage device 12 is 0, based on information of the energy storage amount DB 32. The supply plan creation unit 22 acquires information that the power generation amount of each of the renewable energy power generators 4B and 4C is 160 in daytime and 0 in nighttime, based on information of the equipment capacity DB 33. Based on these pieces of information, an electric power supply plan for the consumer 1B is created that with respect to the power consumption forecast of 60 in daytime the amount of power generation by the renewable energy power generator 4B is 160 and the amount of electricity selling via the power source system 3B is 100 and that with respect to the power consumption forecast of 20 in nighttime the amount of electricity buying via the power source system 3B is 20. An electric power supply plan for the consumer 1C is created that with respect to the power consumption forecast of 60 in daytime the amount of power generation by the renewable energy power generator 4C is 160 and the amount of electricity selling via the power source system 3C is 100 and that with respect to the power consumption forecast of 20 in nighttime the amount of electricity buying via the power source system 3C is 20. The created electric power supply plans are output to the interchange plan creation unit 23.

Next, the interchange plan creation unit 23 creates a plan of electric power interchange from a consumer 1 with a power surplus to a consumer 1 with a power shortage among the plurality of consumers 1, based on the power consumption forecast computation results and the electric power supply plans (step S3). Specifically, although the consumers 1B and 1C are each supplied with purchase electric power in nighttime, both of the consumers 1B and 1C have no power surplus during nighttime in the created electric power supply plans. For this reason, the interchange plan creation unit 23 regards the electric power interchange as being infeasible and creates interchange plans.

Next, the self-sufficiency rate calculation unit 24 calculates an overall self-sufficiency rate of the two consumers 1B and 1C, based on: the power consumption forecast; the self-sufficient electric power supplied to the loads 2B and 2C based on the electric power supply plans and the electric power interchange plans; and the purchase electric power supplied from the electric power systems 3B and 3C to the loads 2B and 2C (step S4).

This self-sufficiency rate is calculated to be 75 % using Expression (1) described above. The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). For example, if the threshold value of the self-sufficiency rate is set in advance to 90 %, the plan determination unit 25 judges the calculated self-sufficiency rate of 75 % to be less than the threshold value, allowing the procedure to go to step S6.

Then, since the self-sufficiency rate has been judged to be smaller than the threshold value, the plan coordination unit 26 causes at least one of the supply plan creation unit 22 and the interchange plan creation unit 23 to execute modification of the plan. Prior to the execution of the plan modification, the plan coordination unit 26 judges whether interchangeable electric power can be produced by each of the consumers 1B and 1C (step S6). From the situations that each of the consumers 1B and 1C sells surplus electric power in daytime and is not accumulating electric power in the energy accumulators 5B and 5C, etc., the plan coordination unit 26 judges production of interchangeable electric power as being possible.

(Second Processing; Plan Modification)

The plan coordination unit 25 then causes the supply plan creation unit 22 and the interchange plan creation unit 23 to execute modification of the electric power supply plan and of the electric power interchange plan (steps S2 and S3). For example, in the case of modifying the electric power supply plan, in the consumer 1B the energy accumulator 5B is caused to accumulate, at an efficiency of 0.9, a part: 11 of the daytime surplus electric power in electric power generated by the renewable energy power generator 4B. As a result, the amount of accumulated energy of the energy accumulator 5B turns to 10 and the amount of electricity selling decreases from 100 to 89. Electric power of 10 accumulated in the energy accumulator 5B in this manner is supplied to the load 2B at a discharge efficiency of 0.9 in nighttime. This enables the amount of nighttime electricity buying of the consumer 1B to be reduced from 20 to 11. A similar plan is created for the consumer 1C. In the thus modified electric power supply plan, the electric power interchange plan is not reviewed since electric power produced in the respective consumers 1B and 1C is consumed in their respective loads 2B and 2C.

The self-sufficiency rate is then calculated to be 86 % using Expression (1) described above by the self-sufficiency rate calculation unit 24 (step S4). The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). Due to the self-sufficiency rate threshold value set to 90 % in advance, the plan determination unit 25 judges the recalculated self-sufficiency rate of 86 % to be less than the threshold value, allowing the procedure to go to step S6.

The plan coordination unit 26 judges whether interchangeable electric power can be produced by each of the consumers 1B and 1C (step S6). From the situations that each of the consumers 1B and 1C still sells surplus electric power in daytime and that electric power is not being accumulated in the hydrogen storage device 12, the plan coordination unit 26 judges production of interchangeable electric power as being possible.

(Third Processing; Plan Remodification)

The plan coordination unit 25 then causes the supply plan creation unit 22 and the interchange plan creation unit 23 to execute remodification of the electric power supply plan and of the electric power interchange plan (steps S2 and S3). For example, in the case of modifying the electric power supply plan and interchange plan, generated electric power of 80 is supplied from the renewable energy power generator 4 of the consumer 1C to the hydrogen production device 11 of the consumer 1C in daytime. The hydrogen production device 11 uses the supplied electric power amount of 80 to produce hydrogen and, at an efficiency of 0.5, stores produced hydrogen into the hydrogen storage device 12 (storage amount: 40). In nighttime, using the hydrogen amount of 40 of hydrogen stored in the hydrogen storage device 12, the fuel cell device 13 generates electric power at an efficiency of 0.55 (power generation amount: 22). Electric power generated by the fuel cell device 13 is mutually interchanged between the consumers 1B and 1C, to create a plan so that the amount of nighttime electricity buying becomes 0. The electric power supply plan and interchange plan are modified in this manner.

The self-sufficiency rate is then calculated to be 100 % using Expression (1) described above by the self-sufficiency rate calculation unit 24 (step S4).

Next, the plan determination unit 25 compares the self-sufficiency rate calculated by the self-sufficiency rate calculation unit 24 with a threshold value to perform judgment (step S5). Since the self-sufficiency rate threshold value is set to 90 % in advance, the plan determination unit 25 judges the recalculated self-sufficiency rate of 100 % to be equal to or more than the threshold value, to fix the modified electric power supply plan and electric power interchange plan at step S7. Based on the fixed electric power supply plan and electric power interchange plan, the energy management system 101 provides control for the control devices 6B and 6C in the consumers 1B and 1C.

(Example 3)

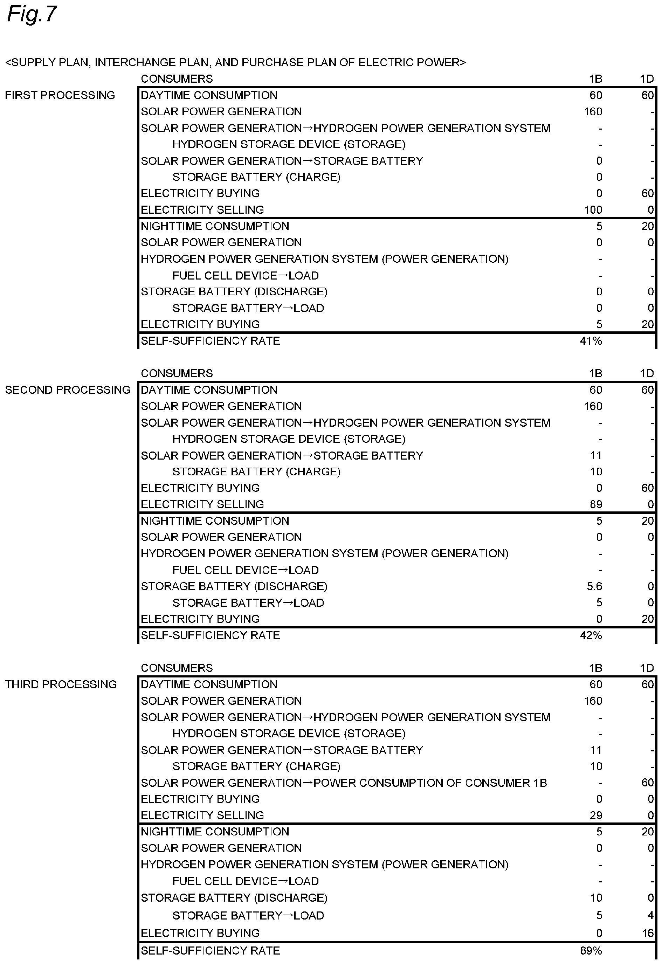

A case will then be described as Example 3 where the energy management system 101 provides energy interchange control between the above-described consumer 1B and a consumer 1D. A table shown in Fig. 7 summarizes electric power supply planning, electric power interchange planning, and electric power purchase planning that are performed through three-times of processing as will be described later in Example 3. The consumer 1D is a consumer not having the renewable energy power generator and the energy accumulator and comprises a load 2D and a power source system 3D.

(First Processing)

First, at step S1 of Fig. 3, power consumption demand is forecasted of the loads 2B and 2D in the respective consumers 1B and 1D.
As a result of the forecast computation, the demand forecast computing unit 21 forecasts the power consumption of the consumer 1B to be 60 in daytime and 5 in nighttime and forecasts the power consumption of the consumer 1D to be 60 in daytime and 20 in nighttime. These forecast computation results are output to the supply plan creation unit 22.
Then, based on the results of the power consumption forecast computations, a supply plan is created of electric power supplied to the loads 2B and 2D from the renewable energy power generator 4B and the energy accumulator 5B in the consumer 1B (step S2).
The supply plan creation unit 22 acquires information that energy accumulated in the energy storage devices 5B is 0, based on information of the energy storage amount DB 32. The supply plan creation unit 22 acquires information that the power generation amount of the renewable energy power generator 4B is 160 in daytime and 0 in nighttime, based on information of the equipment capacity DB 33. Based on these pieces of information, an electric power supply plan for the consumer 1B is created that with respect to the power consumption forecast of 60 in daytime the amount of power generation by the renewable energy power generator 4B is 160 and the amount of electricity selling via the power source system 3B is 100 and that with respect to the power consumption forecast of 5 in nighttime the amount of electricity buying via the power source system 3B is 5. An electric power supply plan for the consumer 1D is created that with respect to the power consumption forecast of 60 in daytime the amount of electricity buying via the power source system 3D is 100 and that with respect to the power consumption forecast of 20 in nighttime the amount of electricity buying via the power source system 3D is 20. The created electric power supply plans are output to the interchange plan creation unit 23.
Next, the interchange plan creation unit 23 creates a plan of electric power interchange from a consumer 1 with a power surplus to a consumer 1 with a power shortage among the plurality of consumers 1, based on the power consumption forecast computation results and the electric power supply plans (step S3). Specifically, although the consumers 1B and 1D are each supplied with purchase electric power in nighttime, both of the consumers 1B and 1D have no power surplus during nighttime in the created electric power supply plans. For this reason, the interchange plan creation unit 23 regards the electric power interchange as being infeasible and creates interchange plans.
Next, the self-sufficiency rate calculation unit 24 calculates an overall self-sufficiency rate of the two consumers 1B and 1D, based on: the power consumption forecast; the self-sufficient electric power supplied to the loads 2B and 2D in accordance with the electric power supply plans and the electric power interchange plans; and the purchase electric power supplied from the electric power systems 3B and 3D to the loads 2B and 2D (step S4).
This self-sufficiency rate is calculated to be 41 % using Expression (1) described above. The self-sufficiency rate calculated by the self-sufficiency rate calculation unit 24 is output to the plan determination unit 25.
Next, the plan determination unit 25 compares the self-sufficiency rate calculated by the self-sufficiency rate calculation unit 24 with a threshold value (85 %) to perform judgment (step S5). It is judged by the plan determination unit 25 that the calculated self-sufficiency rate of 41 % is less than the threshold value of 85 %, allowing the procedure to go to step S6.
Then, since the self-sufficiency rate has been judged to be smaller than the threshold value, the plan coordination unit 26 causes at least one of the supply plan creation unit 22 and the interchange plan creation unit 23 to execute modification of the plan. Prior to the execution of the plan modification, the plan coordination unit 26 judges whether interchangeable electric power can be produced by each of the consumers 1B and 1D (step S6). For example, from the situations that the consumer 1B sells surplus electric power in daytime and is not accumulating electric power in the energy accumulator 5B, etc., the plan coordination unit 26 judges production of interchangeable electric power as being possible.

(Second Processing; Plan Modification)

The plan coordination unit 25 then causes the supply plan creation unit 22 and the interchange plan creation unit 23 to execute modification of the electric power supply plan and of the electric power interchange plan (steps S2 and S3). For example, in the case of modifying the electric power supply plan, in the consumer 1B the energy accumulator 5B is caused to accumulate, at an efficiency of 0.9, a part: 11 of the daytime surplus electric power in electric power generated by the renewable energy power generator 4B. As a result, the amount of accumulated energy of the energy accumulator 5B turns to 10 and the amount of electricity selling decreases from 100 to 89. A part (5.6) of electric power of 10 accumulated in the energy accumulator 5B is supplied to the load 2B at a discharge efficiency of 0.9 in nighttime. This enables the amount of nighttime electricity buying of the consumer 1B to be reduced from 5 to 0.

The self-sufficiency rate is then calculated to be 42 % using Expression (1) described above by the self-sufficiency rate calculation unit 24 (step S4). The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). It is judged by the plan determination unit 25 that the recalculated self-sufficiency rate of 42 % is less than the threshold value, allowing the procedure to advance to step S6.

The plan coordination unit 26 judges whether interchangeable electric power can be produced by each of the consumers 1B and 1D (step S6). From the situations that the consumer 1B still sells surplus electric power in daytime and that there is a remaining amount of energy accumulated in the energy accumulator 5B, the plan coordination unit 26 judges production of interchangeable electric power as being possible.

(Third Processing; Plan Remodification)

The plan coordination unit 25 then causes the supply plan creation unit 22 and the interchange plan creation unit 23 to execute remodification of the electric power supply plan and of the electric power interchange plan (steps S2 and S3). For example, in the case of modifying the electric power supply plan and interchange plan, generated electric power of 60 is supplied in daytime from the renewable energy power generator 4B of the consumer 1B to the lode 2D of the consumer 1D. As a result, daytime electricity selling of the consumer 1B becomes 29 and daytime electricity buying of the consumer 1D becomes 0. Furthermore, a part (4.4) of electric power of 10 accumulated in the energy accumulator 5B is supplied to the load 2D of the consumer 1D at a discharge efficiency of 0.9 in nighttime. This enables the amount of nighttime electricity buying of the consumer 1D to be reduced from 20 to 16. The electric power supply plan and interchange plan are thus modified.

The self-sufficiency rate is then calculated to be 89 % using Expression (1) described above by the self-sufficiency rate calculation unit 24 (step S4). The self-sufficiency rate calculated by the self-sufficiency rate calculation unit 24 is output to the plan determination unit 25.

Next, the plan determination unit 25 compares the self-sufficiency rate calculated by the self-sufficiency rate calculation unit 24 with a threshold value to perform judgment (step S5). Since the self-sufficiency rate threshold value is set to 85 % in advance, the plan determination unit 25 judges the recalculated self-sufficiency rate of 89 % to be not less than the threshold value and fixes the modified electric power supply plan and electric power interchange plan at step S7. Based on the fixed electric power supply plan and electric power interchange plan, the energy management system 101 provides control for the control devices in the consumers 1B and 1D.

According to the energy management system 101 and its control method of this embodiment, carbon-free electric power can mutually be interchanged among a plurality of consumers 1 by creating the operation plan and interchange plan based on the self-sufficiency rate. In consequence, the self-sufficiency rate of carbon-free electric power can be increased in an aggregation of a plurality of consumers 1, and the energy management system 101 and the control method thereof can be provided.

Although Examples 1, 2, and 3 have been described as an example of performing energy interchange control among a plurality of consumers 1 by the energy management system 101 according to this embodiment, such energy interchange control may be provided in the form of various other Examples.

The energy management system 101 may perform energy interchange control between for example: the consumer 1B having the load 2B, the electric power system 3B, the renewable energy power generator 4B, and the energy accumulator 5B; and the consumer 1A having the load 2A, the electric power system 3A, and the renewable energy power generator 4A.

The energy management system 101 may forecast the power consumption of the respective loads in the consumers 1A and 1B and calculate the overall self-sufficiency rate of the consumers 1A and 1B, based on: the self-sufficient electric power supplied to the loads in accordance with the power consumption forecast; and the purchase electric power supplied from the electric power systems to the loads. In order to allow the self-sufficiency rate to exceed the threshold value, the energy management system 101 may perform energy interchange control so that at least a part of electric power generated by the renewable energy power generator 4A of the consumer 1A is accumulated in the energy accumulator 5B of the consumer 1B.

In order to allow the self-sufficiency rate to exceed the threshold value, the energy management system 101 may perform energy interchange control so that at least a part of energy accumulated in the energy accumulator 5B of the consumer 1B is supplied to the load 2A of the consumer 1A.

The configuration of the energy management system 101 is not limited to the above configurations. For example, the energy management system 101 may be a control device including the demand forecast computing unit 21 and the self-sufficiency rate calculation unit 24 to perform energy interchange control among a plurality of consumers so as to allow the self-sufficiency rate to exceed the threshold value.

It is to be noted that by properly combining any ones of the above various embodiments, their respective effects can be presented.

Although the present invention has been fully described in relation to the preferred embodiment while referring to the accompanying drawings, it is apparent for those skilled in the art to make various variations and modifications. Such variations and modifications should be understood as being included therein without departing from the scope of the present invention defined by the appended claims.

The operation plan creation method by the energy management system of the present disclosure has an effect of being able to provide carbon-free electric power and can also be applied to applications such as reducing $CO_2$ emissions in factories, etc.

EXPLANATIONS OF LETTERS OR NUMERALS

1, 1A, 1B, 1C consumer
2, 2A, 2B, 2C load
3, 3A, 3B, 3C electric power system
4, 4A, 4B, 4C renewable energy power generator
5, 5B, 5C energy accumulator
6, 6A, 6B, 6C control device
10 hydrogen power generation system
11 hydrogen production device
12 hydrogen storage device
13 fuel cell device
21 demand forecast computing unit
22 supply plan creation unit
23 interchange plan creation unit
24 self-sufficiency rate calculation unit
25 plan determination unit
26 plan coordination unit
31 demand database
32 energy storage amount database
33 equipment capacity database
34 communication unit
101 energy management system

**Claims**

1. An energy management system interchanging energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load, the energy management system comprising:
a control device configured to perform forecast of power consumption of the load of each of the first consumer and the second consumer; calculate a self-sufficiency rate of entirety of both the first consumer and the second consumer, based on self-sufficient electric power supplied to the load in accordance with the forecast of power consumption and on purchase electric power supplied from the electric power system to the load; and provide interchange control of energy so that at least a part of electric power generated by the renewable energy power generator of the second consumer is accumulated in the energy accumulator of the first consumer so that the self-sufficiency rate exceeds a threshold value.

2. An energy management system interchanging energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load, the energy management system comprising:
a control device configured to perform forecast of power consumption of the load of each of the first consumer and the second consumer; calculate a self-sufficiency rate of entirety of both the first consumer and the second consumer, based on self-sufficient electric power supplied to the load in accordance with the forecast of power consumption and on purchase electric power supplied from the electric power system to the load; and provide interchange control of energy so that at least a part of electric power accumulated in the energy accumulator of the first consumer is supplied to the load of the second consumer so that the self-sufficiency rate exceeds a threshold value.

3. The energy management system according to claim 1 or 2, wherein
the control device comprises:

a demand forecast computing unit configured to perform forecast of power consumption of the load of the first consumer and the second consumer;
a supply plan creation unit configured to create a supply plan of electric power supplied from the renewable energy power generator of each of the first consumer and the second consumer and from the energy accumulator to each of the loads, based on the forecast of power consumption;
an interchange plan creation unit configured to create an interchange plan of electric power transferred from the consumer having surplus electric power to the consumer with electric power shortage between the first consumer and the second consumer, based on the forecast of power consumption and on the electric power supply plan;
a self-sufficiency rate calculation unit configured to calculate a self-sufficiency rate of entirety of both the first consumer and the second consumer, based on the forecast of power consumption, self-sufficient electric power supplied to the load based on the supply plan of electric power and the interchange plan of electric power, and purchase electric power suppled from the electric power system to the load; and
a plan determination unit configured to fix the operation plan of electric power and the interchange plan of electric power when the self-sufficiency rate is equal to or greater than a threshold value.

4. The energy management system according to claim 3, further comprising:
a plan coordination unit configured to cause at least one of the supply plan creation unit and the interchange plan creation unit to execute plan modification when the self-sufficiency rate is smaller than the threshold value.

5. The energy management system according to claim 3 or 4, wherein the interchange plan creation unit creates an interchange plan of electric power so that electric power generated by the renewable energy power generator of the second consumer is accumulated in the energy accumulator of the first consumer.

6. A method of controlling an energy management system interchanging energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load, the method comprising:

performing forecast of power consumption of the load of each of the first consumer and the second consumer;
calculating a self-sufficiency rate of entirety of both the first consumer and the second consumer, based on self-sufficient electric power supplied to the load in accordance with the forecast of power consumption and on purchase electric power supplied from the electric power system to the load; and
providing interchange control of energy so that at least a part of electric power generated by the renewable energy power generator of the second consumer is accumulated in the energy accumulator of the first consumer so that the self-sufficiency rate exceeds a threshold value.

7. A method of controlling an energy management system interchanging energy between a first consumer and a second consumer, the first consumer having a load, an electric power system supplying electric power to the load, a renewable energy power generator supplying electric power to the load, and an energy accumulator accumulating energy of electric power generated by the renewable energy power generator so as to allow supply to the load, the second consumer having a load, an electric power system supplying electric power to the load, and a renewable energy power generator supplying electric power to the load, the method comprising:

performing forecast of power consumption of the load of each of the first consumer and the second consumer;
calculating a self-sufficiency rate of entirety of both the first consumer and the second consumer, based on self-sufficient electric power supplied to the load in accordance with the forecast of power consumption and on purchase electric power supplied from the electric power system to the load; and
providing interchange control of energy so that at least a part of electric power accumulated in the energy accumulator of the first consumer is supplied to the load of the second consumer so that the self-sufficiency rate exceeds a threshold value.

8. The method of controlling an energy management system according to claim 6 or 7, wherein
the calculating a self-sufficiency rate comprises:

creating a supply plan of electric power supplied to the load from the renewable energy power generator of each of the first consumer and the second consumer and from the energy accumulator, based on the forecast of power consumption;
creating an interchange plan of electric power transferred from the consumer with surplus electric power to the consumer with electric power shortage between the first consumer and the second consumer, based on the forecast of power consumption and on the supply plan of electric power; and
calculating an self-sufficiency rate of entirety of both the first consumer and the second consumer, based on the forecast of power consumption, self-sufficient electric power supplied to the load based on the supply plan of electric power and the interchange plan of electric power, and purchase electric power supplied from the electric power system to the load.

9. The method of controlling an energy management system according to claim 8, wherein when the self-sufficiency rate is smaller than the threshold value, plan modification is executed for at least one of the supply plan of electric power and the interchange plan of electric power.

10. The method of controlling an energy management system according to claim 8 or 9, wherein the interchange plan of electric power is made so that electric power generated by the renewable energy power generator of the second consumer is accumulated in the energy accumulator of the first consumer.

11. A program causing a computer to execute a method of controlling an energy management system according to any one of claims 6 to 10.

Fig.1

## Fig.2

EP 3 916 942 A1

# Fig.3

START

S1 | DEMAND FORECAST COMPUTATION

S2 | CREATE SUPPLY PLAN

S3 | CREATE INTERCHANGE PLAN

S4 | CALCULATE SELF-SUFFICIENCY RATE

S5 | FELF-SUFFICIENCY RATE IS THRESHOLD VALUE OR MORE ? — YES

NO

S6 | FURTHER POWER INTERCHANGE IS POSSIBLE AMONG CONSUMERS ?
YES

NO

S7 | DETERMINE PLAN

END

## Fig.4

<SUPPLY PLAN, INTERCHANGE PLAN, AND PURCHASE PLAN OF ELECTRIC POWER>

**FIRST PROCESSING**

| CONSUMERS | 1A | 1B | 1C |
|---|---|---|---|
| DAYTIME CONSUMPTION | 60 | 60 | 60 |
| SOLAR POWER GENERATION | 160 | 160 | 160 |
| SOLAR POWER GENERATION→HYDROGEN POWER GENERATION SYSTEM | | | 0 |
|     HYDROGEN STORAGE DEVICE (STORAGE) | | | 0 |
| SOLAR POWER GENERATION→STORAGE BATTERY | | 0 | 0 |
|     STORAGE BATTERY (CHARGE) | | 0 | 0 |
| ELECTRICITY SELLING | 100 | 100 | 100 |
| NIGHTTIME CONSUMPTION | 20 | 20 | 20 |
| SOLAR POWER GENERATION | 0 | 0 | 0 |
| HYDROGEN POWER GENERATION SYSTEM (POWER GENERATION) | 0 | 0 | 0 |
|     FUEL CELL DEVICE→LOAD | 0 | 0 | 0 |
| STORAGE BATTERY (DISCHARGE) | 0 | 0 | 0 |
|     STORAGE BATTERY→LOAD | 0 | 0 | 0 |
| ELECTRICITY BUYING | 20 | 20 | 20 |
| SELF-SUFFICIENCY RATE | 75% | | |

**SECOND PROCESSING**

| CONSUMERS | 1A | 1B | 1C |
|---|---|---|---|
| DAYTIME CONSUMPTION | 60 | 60 | 60 |
| SOLAR POWER GENERATION | 160 | 160 | 160 |
| SOLAR POWER GENERATION→HYDROGEN POWER GENERATION SYSTEM | | | 0 |
|     HYDROGEN STORAGE DEVICE (STORAGE) | | | 0 |
| SOLAR POWER GENERATION→STORAGE BATTERY | | 11 | 11 |
|     STORAGE BATTERY (CHARGE) | | 10 | 10 |
| ELECTRICITY SELLING | 100 | 89 | 89 |
| NIGHTTIME CONSUMPTION | 20 | 20 | 20 |
| SOLAR POWER GENERATION | 0 | 0 | 0 |
| HYDROGEN POWER GENERATION SYSTEM (POWER GENERATION) | 0 | 0 | 0 |
|     FUEL CELL DEVICE→LOAD | 0 | 0 | 0 |
| STORAGE BATTERY (DISCHARGE) | 0 | 10 | 10 |
|     STORAGE BATTERY→LOAD | 0 | 9 | 9 |
| ELECTRICITY BUYING | 20 | 11 | 11 |
| SELF-SUFFICIENCY RATE | 83% | | |

**THIRD PROCESSING**

| CONSUMERS | 1A | 1B | 1C |
|---|---|---|---|
| DAYTIME CONSUMPTION | 60 | 60 | 60 |
| SOLAR POWER GENERATION | 160 | 160 | 160 |
| SOLAR POWER GENERATION→HYDROGEN POWER GENERATION SYSTEM | | | 188 |
|     HYDROGEN STORAGE DEVICE (STORAGE) | | | 94 |
| SOLAR POWER GENERATION→STORAGE BATTERY | | 11 | 11 |
|     STORAGE BATTERY (CHARGE) | | 10 | 10 |
| ELECTRICITY SELLING | 30 | 30 | 30 |
| NIGHTTIME CONSUMPTION | 20 | 20 | 20 |
| SOLAR POWER GENERATION | 0 | 0 | 0 |
| HYDROGEN POWER GENERATION SYSTEM (POWER GENERATION) | 36 | 20 | 20 |
|     FUEL CELL DEVICE→LOAD | 20 | 11 | 11 |
| STORAGE BATTERY (DISCHARGE) | 0 | 10 | 10 |
|     STORAGE BATTERY→LOAD | 0 | 9 | 9 |
| ELECTRICITY BUYING | 0 | 0 | 0 |
| SELF-SUFFICIENCY RATE | 107% | | |

# Fig.5

EP 3 916 942 A1

## Fig.6

<SUPPLY PLAN, INTERCHANGE PLAN, AND PURCHASE PLAN OF ELECTRIC POWER>

**FIRST PROCESSING**

| CONSUMERS | 1C | 1A |
|---|---|---|
| DAYTIME CONSUMPTION | 60 | 60 |
| SOLAR POWER GENERATION | 160 | 160 |
| SOLAR POWER GENERATION→HYDROGEN POWER GENERATION SYSTEM | 0 | - |
| HYDROGEN STORAGE DEVICE (STORAGE) | 0 | - |
| SOLAR POWER GENERATION→STORAGE BATTERY | 0 | 0 |
| STORAGE BATTERY (ELECTRICITY SELLING) | 0 | 0 |
| ELECTRICITY SELLING | 100 | 100 |
| NIGHTTIME CONSUMPTION | 20 | 20 |
| SOLAR POWER GENERATION | 0 | 0 |
| HYDROGEN POWER GENERATION SYSTEM (POWER GENERATION) | 0 | 0 |
| FUEL CELL DEVICE→LOAD | 0 | 0 |
| STORAGE BATTERY (DISCHARGE) | 0 | 0 |
| STORAGE BATTERY→LOAD | 0 | 0 |
| ELECTRICITY BUYING | 20 | 20 |
| SELF-SUFFICIENCY RATE | 75% | |

**SECOND PROCESSING**

| CONSUMERS | 1C | 1A |
|---|---|---|
| DAYTIME CONSUMPTION | 60 | 60 |
| SOLAR POWER GENERATION | 160 | 160 |
| SOLAR POWER GENERATION→HYDROGEN POWER GENERATION SYSTEM | 0 | - |
| HYDROGEN STORAGE DEVICE (STORAGE) | 0 | - |
| SOLAR POWER GENERATION→STORAGE BATTERY | 11 | 11 |
| STORAGE BATTERY (ELECTRICITY SELLING) | 10 | 10 |
| ELECTRICITY SELLING | 89 | 89 |
| NIGHTTIME CONSUMPTION | 20 | 20 |
| SOLAR POWER GENERATION | 0 | 0 |
| HYDROGEN POWER GENERATION SYSTEM (POWER GENERATION) | 0 | 0 |
| FUEL CELL DEVICE→LOAD | 0 | 0 |
| STORAGE BATTERY (DISCHARGE) | 10 | 10 |
| STORAGE BATTERY→LOAD | 9 | 9 |
| ELECTRICITY BUYING | 11 | 11 |
| SELF-SUFFICIENCY RATE | 86% | |

**THIRD PROCESSING**

| CONSUMERS | 1C | 1A |
|---|---|---|
| DAYTIME CONSUMPTION | 60 | 60 |
| SOLAR POWER GENERATION | 160 | 160 |
| SOLAR POWER GENERATION→HYDROGEN POWER GENERATION SYSTEM | 80 | - |
| HYDROGEN STORAGE DEVICE (STORAGE) | 40 | - |
| SOLAR POWER GENERATION→STORAGE BATTERY | 11 | 11 |
| STORAGE BATTERY (ELECTRICITY SELLING) | 10 | 10 |
| ELECTRICITY SELLING | 9 | 89 |
| NIGHTTIME CONSUMPTION | 20 | 20 |
| SOLAR POWER GENERATION | 0 | 0 |
| HYDROGEN POWER GENERATION SYSTEM (POWER GENERATION) | 20 | 20 |
| FUEL CELL DEVICE→LOAD | 11 | 11 |
| STORAGE BATTERY (DISCHARGE) | 10 | 10 |
| STORAGE BATTERY→LOAD | 9 | 9 |
| ELECTRICITY BUYING | 0 | 0 |
| SELF-SUFFICIENCY RATE | 100% | |

## Fig.7

<SUPPLY PLAN, INTERCHANGE PLAN, AND PURCHASE PLAN OF ELECTRIC POWER>

FIRST PROCESSING

| CONSUMERS | 1B | 1D |
|---|---|---|
| DAYTIME CONSUMPTION | 60 | 60 |
| SOLAR POWER GENERATION | 160 | - |
| SOLAR POWER GENERATION→HYDROGEN POWER GENERATION SYSTEM | - | - |
|    HYDROGEN STORAGE DEVICE (STORAGE) | - | - |
| SOLAR POWER GENERATION→STORAGE BATTERY | 0 | - |
|    STORAGE BATTERY (CHARGE) | 0 | - |
| ELECTRICITY BUYING | 0 | 60 |
| ELECTRICITY SELLING | 100 | 0 |
| NIGHTTIME CONSUMPTION | 5 | 20 |
| SOLAR POWER GENERATION | 0 | 0 |
| HYDROGEN POWER GENERATION SYSTEM (POWER GENERATION) | - | - |
|    FUEL CELL DEVICE→LOAD | - | - |
| STORAGE BATTERY (DISCHARGE) | 0 | 0 |
|    STORAGE BATTERY→LOAD | 0 | 0 |
| ELECTRICITY BUYING | 5 | 20 |
| SELF-SUFFICIENCY RATE | 41% | |

SECOND PROCESSING

| CONSUMERS | 1B | 1D |
|---|---|---|
| DAYTIME CONSUMPTION | 60 | 60 |
| SOLAR POWER GENERATION | 160 | - |
| SOLAR POWER GENERATION→HYDROGEN POWER GENERATION SYSTEM | - | - |
|    HYDROGEN STORAGE DEVICE (STORAGE) | - | - |
| SOLAR POWER GENERATION→STORAGE BATTERY | 11 | - |
|    STORAGE BATTERY (CHARGE) | 10 | - |
| ELECTRICITY BUYING | 0 | 60 |
| ELECTRICITY SELLING | 89 | 0 |
| NIGHTTIME CONSUMPTION | 5 | 20 |
| SOLAR POWER GENERATION | 0 | 0 |
| HYDROGEN POWER GENERATION SYSTEM (POWER GENERATION) | - | - |
|    FUEL CELL DEVICE→LOAD | - | - |
| STORAGE BATTERY (DISCHARGE) | 5.6 | 0 |
|    STORAGE BATTERY→LOAD | 5 | 0 |
| ELECTRICITY BUYING | 0 | 20 |
| SELF-SUFFICIENCY RATE | 42% | |

THIRD PROCESSING

| CONSUMERS | 1B | 1D |
|---|---|---|
| DAYTIME CONSUMPTION | 60 | 60 |
| SOLAR POWER GENERATION | 160 | - |
| SOLAR POWER GENERATION→HYDROGEN POWER GENERATION SYSTEM | - | - |
|    HYDROGEN STORAGE DEVICE (STORAGE) | - | - |
| SOLAR POWER GENERATION→STORAGE BATTERY | 11 | - |
|    STORAGE BATTERY (CHARGE) | 10 | - |
| SOLAR POWER GENERATION→POWER CONSUMPTION OF CONSUMER 1B | - | 60 |
| ELECTRICITY BUYING | 0 | 0 |
| ELECTRICITY SELLING | 29 | 0 |
| NIGHTTIME CONSUMPTION | 5 | 20 |
| SOLAR POWER GENERATION | 0 | 0 |
| HYDROGEN POWER GENERATION SYSTEM (POWER GENERATION) | - | - |
|    FUEL CELL DEVICE→LOAD | - | - |
| STORAGE BATTERY (DISCHARGE) | 10 | 0 |
|    STORAGE BATTERY→LOAD | 5 | 4 |
| ELECTRICITY BUYING | 0 | 16 |
| SELF-SUFFICIENCY RATE | 89% | |

## INTERNATIONAL SEARCH REPORT

| | International application No. |
|---|---|
| | PCT/JP2020/002388 |

**A. CLASSIFICATION OF SUBJECT MATTER**
H02J 3/00(2006.01)i; H02J 3/28(2006.01)i; H02J 3/32(2006.01)i; H02J 3/38(2006.01)i; H02J 3/46(2006.01)i
FI:     H02J3/46; H02J3/38 130; H02J3/38 160; H02J3/38 170; H02J3/38 110; H02J3/28; H02J3/32; H02J3/00 130; H02J3/00 180

According to International Patent Classification (IPC) or to both national classification and IPC

**B. FIELDS SEARCHED**

Minimum documentation searched (classification system followed by classification symbols)
H02J3/00; H02J3/28; H02J3/32; H02J3/38; H02J3/46

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-22919 A (DAIWA HOUSE INDUSTRY CO., LTD.) 26.01.2017 (2017-01-26) entire text, all drawings | 1–11 |
| A | JP 2012-60761 A (SEKISUI CHEMICAL CO., LTD.) 22.03.2012 (2012-03-22) entire text, all drawings | 1–11 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 February 2020 (04.02.2020) | 14 April 2020 (14.04.2020) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

**INTERNATIONAL SEARCH REPORT**
Information on patent family members

| International application No. |
| --- |
| PCT/JP2020/002388 |

| Patent Documents referred in the Report | Publication Date | Patent Family | Publication Date |
| --- | --- | --- | --- |
| JP 2017-22919 A | 26 Jan. 2017 | (Family: none) | |
| JP 2012-60761 A | 22 Mar. 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017191754 A1